# FASCICULE DE BREVET EUROPEEN

(11) **EP 1 804 161 B1**
(45) Date de publication et mention de la délivrance du brevet: **03.03.2010**
(21) Numéro de dépôt: 06127368.6
(22) Date de dépôt: 29.12.2006
(51) Int. Cl.: G06F 7/72

(54) **Détection de perturbation dans un calcul cryptographique**
Störungsdetektion in einer kryptographischen Berechnung
Detection of a disturbance in a cryptographic calculation

(30) Priorité: 29.12.2005 FR 0554134
(43) Date de publication de la demande: 04.07.2007
(73) Titulaire: PROTON WORLD INTERNATIONAL N.V., 1930 ZAVENTEM (BE)
(72) Inventeur: Huque, Thierry, MOXHE 4280 (BE); Modave, Jean-Louis, OTTIGNIES 1340 (BE)
(74) Mandataire: de Beaumont, Michel

(56) Documents cités:
- WO-A-02/099624
- US-A1- 2004 215 685

## Description

### Domaine de l'invention

La présente invention concerne de façon générale les circuits électroniques et plus particulièrement les circuits intégrés comportant des éléments de calcul (logiciels et/ou matériels) mettant en oeuvre des algorithmes effectuant plusieurs opérations identiques sur un même élément d'un groupe au sens mathématique du terme. Par opération, on entend toute loi de composition de deux éléments du groupe telle que le résultat est un élément du groupe. On fera par la suite indifféremment référence au terme opération ou à l'expression loi (de composition) interne.

Un exemple d'application de la présente invention concerne les exponentiations exécutées notamment dans des calculs cryptographiques, par exemple d'un algorithme dit RSA qui est un algorithme à clé publique basé sur un calcul d'exponentiation modulaire.

Un autre exemple d'application de la présente invention concerne les opérations effectuées sur des courbes elliptiques dans des calculs cryptographiques, par exemple d'un algorithme dit de Diffie-Hellman qui est un protocole de génération de clés partagées à partir d'un échange de clés publiques.

La présente invention concerne plus particulièrement la protection d'un calcul par itérations contre des attaques par perturbations du fonctionnement du circuit électronique exécutant le calcul. De telles attaques ont par exemple pour objet de découvrir des quantités censées rester secrètes. L'invention concerne plus particulièrement les attaques dites par injection de faute.

Un exemple d'application de la présente invention concerne les cartes à puce et analogues.

### Exposé de l'art antérieur

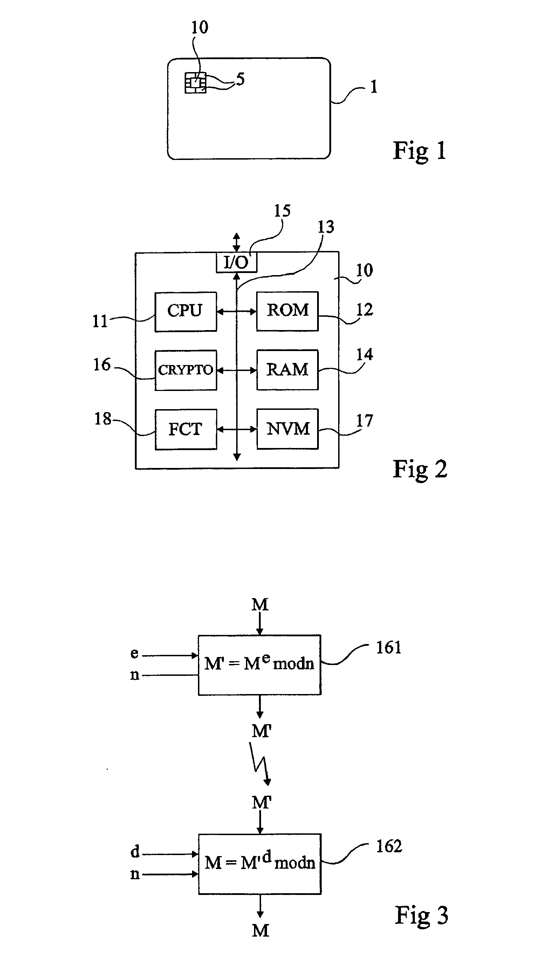

La figure 1 représente, de façon très schématique, une carte à puce 1 du type auquel s'applique à titre d'exemple la présente invention. Une telle carte est le plus souvent constituée d'un support en matière plastique sur ou dans lequel est rapportée une puce 10 de circuit intégré associée à des contacts 5 de communication avec un terminal (non représenté) et/ou à des éléments non représentés d'émission-réception radio fréquence pour une communication sans contact.

Un autre exemple d'application de la présente invention concerne les microordinateurs et plus généralement les cartes électroniques (par exemple, une carte mère d'ordinateur personnel) comportant un circuit intégré effectuant des calculs sur un groupe, par exemple à des fins de transmissions de données.

La figure 2 représente, de façon très schématique et sous forme de blocs, un exemple classique de circuit électronique 10, par exemple d'une carte à puce, auquel s'applique plus particulièrement la présente invention. Dans cet exemple, il s'agit d'un microcontrôleur comportant une unité centrale de traitement 11 (CPU) susceptible d'exécuter des programmes le plus souvent contenus dans une mémoire morte 12 (ROM) avec laquelle l'unité 11 communique au moyen d'un ou plusieurs bus 13. Le ou les bus 13 véhiculent des signaux entre les différents éléments du circuit et notamment entre l'unité centrale 11 et une ou plusieurs mémoires vives 14 (RAM) destinées à contenir des données en cours de traitement, et une interface 15 (I/O) pour communiquer avec ou sans contact avec l'extérieur du circuit 10. Dans les circuits auxquels s'applique la présente invention, une fonction de chiffrement ou de cryptographie 16 (CRYPTO) est le plus souvent réalisée de façon matérielle dans le microcontrôleur 10 et exécute au moins un calcul, par exemple d'exponentiation. Le microcontrôleur peut également comporter une zone de mémoire non volatile 17 (NVM) réinscriptible (par exemple de type EEPROM ou analogue) et d'autres fonctions (bloc 18, FCT) selon l'application, par exemple, des fonctions de calcul de parité (CRC), de génération de quantités numériques pour un algorithme de type DES, etc.

La présente invention s'applique également à des circuits intégrés plus simples se contentant d'une cellule de calcul cryptographique et d'une zone de mémoire pour stocker au moins une ou plusieurs quantités censées rester secrètes et définissant le nombre d'itérations de l'opération.

La figure 3 illustre, de façon très schématique et sous forme de blocs, un exemple classique d'algorithme RSA exploitant un calcul d'exponentiation modulaire. Un tel algorithme est décrit, par exemple, dans l'ouvrage "Handbook of Applied Cryptography" d'A. Menezes, P. Van Oorschot et S. Vanstone édité par CRC Press en 1997, et dans la norme RSA Cryptography Standard V2.1 (RSA Labs, June 14, 2002).

Un message M à chiffrer est envoyé sur une cellule 161 de chiffrement (par exemple, une partie dédiée d'un circuit intégré) qui reçoit ou contient également un exposant e et un modulo n devant être utilisés dans le calcul et qui définissent la clé publique de l'algorithme RSA. Le bloc 161 exécute le calcul M^{e} mod n et fournit le message chiffré M'.

Côté déchiffrement, une cellule 162 de calcul d'exponentiation modulaire reçoit le message M', ainsi que le modulo n (public dans le cas du RSA) et un exposant d définissant ici un élément de la clé privée du récepteur du message. Le calcul opéré est identique à celui du chiffrement. La cellule 162 exécute l'opération M mod n pour fournir le message M en clair. Les éventuelles relations que doivent respecter les nombres e, d et n pour la mise en oeuvre de l'algorithme RSA n'ont pas d'importance pour l'exposé de l'invention. En pratique, un même circuit peut comporter une seule cellule 161 ou 162 chargée avec des paramètres différents selon qu'elle chiffre ou déchiffre.

En raison de la taille des nombres manipulés, l'exponentiation est calculée par une technique dite de carré et multiplication (square and multiply) qui exploite la représentation binaire de l'exposant (e ou d) pour décomposer le calcul en une succession d'élévations au carré et de multiplications par un résultat intermédiaire précédent.

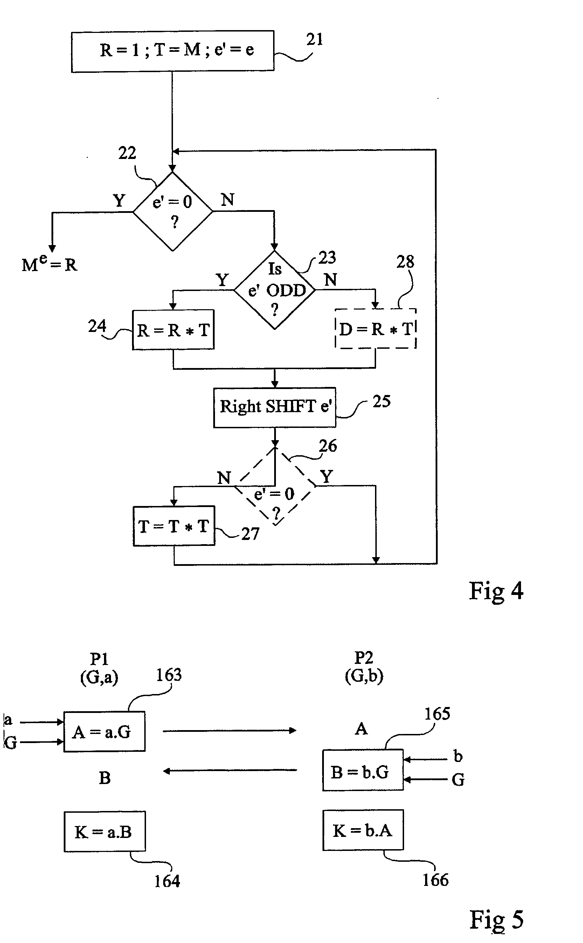

La figure 4 est un organigramme illustrant un calcul d'exponentiation par une technique classique de carré et multiplication. Le calcul, exposé sous forme d'organigramme en figure 4, est en pratique généralement effectué par une cellule matérielle (en logique câblée) mais peut également être mis en oeuvre de façon logicielle.

Une première étape (bloc 21, R=1 ; T=M ; e'=e) consiste à initialiser une variable résultat R à l'unité, une variable temporaire T comme contenant le message M et une variable d'exposant e' à la valeur de l'exposant e. Dans le cas du RSA, tous les calculs s'effectuent modulo n. La valeur n est donc également connue ou reçue par la cellule d'exécution de l'exponentiation.

Pour simplifier l'exposé de l'invention, on prendra pour exemple un calcul d'exponentiation avec les notations e M mod n, sachant que le nombre M, l'exposant e et le modulo n peuvent former tout ou partie de n'importe quel nombre (par exemple M'), exposant (par exemple, d) et modulo, en relation ou non avec l'algorithme RSA.

La technique de carré et multiplication tire profit de l'expression binaire de l'exposant dans un calcul par des moyens électroniques ou informatiques. La variable e' sera considérée par la suite comme une succession de bits représentant initialement l'exposant e du calcul.

Le calcul de carré et multiplication s'effectue par itérations sur les variables T et R, le nombre d'itérations étant égal au nombre de bits (significatifs) de l'exposant e.

Avant chaque itération, la valeur courante de la variable e' est testée (bloc 22, e'=0 ?) pour déterminer si elle contient encore des bits significatifs (au moins encore un bit à 1). Si la variable e' est nulle (sortie Y du test 22), la e variable résultat R fournit le résultat M de l'exponentiation. Sinon (sortie N du bloc 22), le calcul entre dans une boucle.

A chaque itération de cette boucle, le caractère pair ou impair de la valeur courante de la variable e' est testé (bloc 23, Is e' ODD ?). Si e' est impair (sortie Y du test 23), le contenu de la variable R est multiplié par le contenu de la variable T et le résultat devient la valeur courante de la variable R (bloc 24, R=R*T). Sinon (sortie N du bloc 23), la variable R n'est pas modifiée.

Le contenu de la variable e' est ensuite décalé vers la droite (bloc 25, Right SHIFT e'), ce qui revient à éliminer le bit de poids faible qui a conditionné le caractère pair ou impair lors du test 23 précédent. Dans l'exemple d'une représentation binaire de l'exposant, cela revient à diviser la variable e' par 2 (en partie entière). Selon les éléments matériels utilisés pour exécuter l'algorithme, l'étape de décalage vers la droite de la variable e' peut être effectuée par un registre à décalage ou être remplacée par des prises en compte successives des différents bits de l'exposant e.

Le contenu de la variable T est ensuite élevé au carré (bloc 27, T=T*T), ce qui revient à effectuer une autre opération de multiplication et le résultat devient la valeur courante de la variable T. L'itération est terminée. Le calcul reprend alors par le test 22 pour refaire une itération s'il reste des bits significatifs non traités de l'exposant.

Optionnellement, la valeur courante (comportant un bit représentatif de moins) de la variable e' est testée (bloc 26, e'= 0 ? en pointillés) préalablement à l'étape 27 pour vérifier s'il reste des bits significatifs. Dans l'affirmative (sortie N du test 26), on effectue le calcul 27. Sinon (sortie Y du bloc 26), la variable T n'est pas modifiée. Cette option permet d'économiser un calcul en fin d'algorithme.

Un inconvénient d'un calcul d'exponentiation tel que décrit en relation avec la figure 4 est qu'il est sensible à des attaques tendant à découvrir les quantités secrètes manipulées.

Un premier type d'attaques consiste à surveiller le temps d'exécution du calcul qui diffère, à chaque itération, selon le caractère pair ou impair de l'exposant courant e'. Or, ce caractère pair ou impair donne directement la valeur 0 ou 1 du bit de poids faible correspondant.

Une solution connue pour résoudre ce problème de durée d'exécution est d'introduire (bloc 28, D=R*T), en cas de test 23 négatif (bit de poids faible de la variable e' égal à 0), un calcul arbitraire ne servant pas au résultat.

Un tel calcul inutile n'est pas nécessaire pour compenser le calcul 27 en présence du test 26, car la seule itération dans laquelle le calcul 27 n'est pas exécuté est la dernière.

Même si on sait faire en sorte que le calcul prenne le même temps quelle que soit l'itération, ce calcul reste sensible à une autre catégorie d'attaques, dites par injection de fautes. Une attaque par injection de faute consiste à provoquer une perturbation dans le fonctionnement du circuit intégré lors de l'exécution du calcul (par exemple, au moyen d'un laser, d'une perturbation sur l'alimentation, etc.) et à interpréter le fonctionnement ultérieur du circuit pour tenter de découvrir les quantités secrètes (ici, l'exposant e).

Dans le cas d'un calcul de carré et multiplication, en perturbant l'opération de multiplication (bloc 24 ou bloc 28) dans une itération de l'algorithme, un pirate est en mesure de déterminer si le bit de poids faible de la valeur courante de l'exposant (e') est 0 ou 1. En effet, s'il s'agit d'un 0, le résultat final fourni par le calcul sera le même que sans perturbation, car la perturbation porte sur la multiplication du bloc 28 tandis que si le bit est à 1, le résultat final sera modifié car la perturbation porte sur la multiplication du bloc 24. En répétant ses injections de fautes à différents instants dans des exécutions successives du même calcul, il lui est alors possible de déduire tout ou partie de la clé (l'exposant), donc à tout le moins de réduire le nombre d'hypothèses à faire sur cette clé.

La figure 5 illustre, de façon très schématique et sous forme de blocs, un autre exemple d'application de l'invention à un algorithme de Diffie-Hellman sur courbe elliptique.

Un tel algorithme sert à créer une clé K partagée (par exemple une clé de session) pour un échange protégé entre deux systèmes ou circuits P1 et P2. Chaque circuit détient une clé privée respectivement a ou b et un élément G d'une courbe elliptique définissant, avec une loi de composition interne dite arbitrairement "addition", notée "(+)", un groupe abélien sur lequel s'effectue le calcul. L'élément G est connu et n'a pas besoin d'être protégé. Les clés privées a et b sont des nombres entiers exprimant le nombre de fois que la loi de composition du groupe est appliquée.

Une propriété d'une courbe elliptique est donc que, partant d'un point de la courbe, l'application un nombre entier de fois de la loi de composition notée addition donne un résultat encore situé sur la courbe. Par abus de langage et de façon arbitraire, on parle de "produit", noté "." pour désigner le nombre de fois que la loi de composition est appliquée.

Les courbes elliptiques sont utilisées en cryptographie pour le caractère asymétrique du calcul itératif, c'est-à-dire que connaissant un point de la courbe, il est facile d'obtenir un autre point de la courbe en appliquant un nombre entier de fois la loi de composition, mais que connaissant deux points de la courbe, il est difficile de retrouver le nombre entier (la clé) liant ces deux points.

Des exemples d'application des courbes elliptiques à la cryptographie sont décrits dans les normes : "Standards for Efficient Cryptography, sec 1: Elliptic Curve Cryptography" - Certicom Research - September 20, 2000, Version 1.0c ; "DSA on Elliptic Curves: ECDSA" - ISO/IEC 15946-2 ; et "Diffie-Hellman on Elliptic Curves: ECDH" - ISO/IEC 15946-3.

Chaque circuit P1, P2 calcule une clé publique, respectivement A, B comme étant le résultat du "produit" de sa clé privée a ou b et de l'élément G (bloc 163, A=a.G et bloc 165, B=b.G). Puis, chaque circuit envoie à l'autre sa clé publique. Enfin, chaque circuit P1, P2 calcule une clé K comme étant le "produit" de sa clé privée a ou b par la clé publique, respectivement B ou A, de l'autre circuit (bloc 164, K=a.B, bloc 166, K=b.A). Grâce aux propriétés de la loi de composition interne du groupe, les clés K sont identiques (K=a.b.G=b.a.G). La clé K peut donc être utilisée comme clé sécrète partagée par les deux circuits. Elle peut alors servir de clé de chiffrement (par exemple par un algorithme symétrique), d'authentification, etc. entre les circuits P1 et P2.

Comme pour une exponentiation, en raison de la taille des nombres manipulés, les applications successives de la loi de composition interne à partir d'un point d'une courbe elliptique sont calculées par une technique dite d'addition et doublement (add and double) qui exploite la représentation binaire (polynomiale) du nombre entier (a ou b) pour décomposer le calcul en une succession de doublements (application de la loi de composition à un point sur lui-même) et d'additions (application de la loi de composition à un résultat intermédiaire précédent).

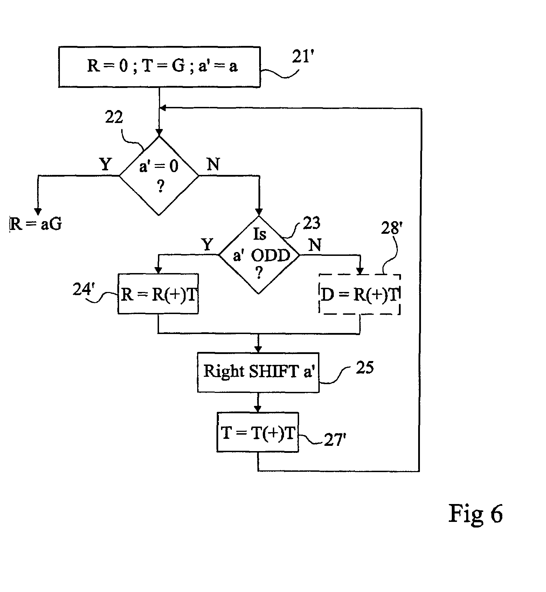

La figure 6 est un organigramme illustrant la technique d'addition et doublement, par exemple appliquée à un point G d'une courbe elliptique. Comme pour la figure 4, le calcul exposé sous forme d'organigramme en figure 6 est en pratique généralement effectué par une cellule matérielle (en logique câblée) mais peut également être mis en oeuvre de façon logicielle.

La technique d'addition et doublement exploite la même caractéristique de l'expression binaire du nombre entier que celle exploitée pour l'exposant dans l'exponentiation modulaire. En effet, le produit a.G peut s'écrire G (+) G (+) ... (+) G (a fois). En représentant a de façon binaire sur t bits, ce produit peut également s'écrire aₜ2 G (+) aₜ₋₁2 G (+) ... (+) a₁2 G(+)a₀2⁰G, où le coefficient aᵢ du terme de degré i (i étant compris entre 0 et t) correspond au bit (valeur 0 ou 1) de poids i de l'expression binaire du nombre a.

Le calcul d'addition et doublement s'effectue alors par itérations sur des variables T et R, représentant respectivement une variable temporaire et la variable résultat, le nombre d'itérations étant égal au nombre t de bits (significatifs) du nombre a. Le calcul de la figure 6 est identique à celui de la figure 4 en :
initialisant (bloc 21', R=0 ; T=G; a'=a) les variables R, T et a', respectivement avec les valeurs 0 désignant l'élément neutre de la loi de composition interne (ici l'addition) sur le groupe (ici la courbe elliptique), G désignant l'élément du groupe (ici un point de la courbe elliptique) et a sous la forme d'une suite de coefficients d'un polynôme (ici une suite de bits) dont le degré significatif désigne le nombre d'itérations ;
remplaçant les multiplications * des blocs 24 et 27 (et si elle existe celle du bloc 28) par la loi de composition (+) (bloc 24', R=R(+)T, bloc 27', T=T(+)T et bloc 28', D=R(+)T) ; et
appliquant les étapes 22, 23 et 25 à la variable a'.

L'algorithme de la figure 6 présente les mêmes inconvénients de sensibilité à des attaques, notamment par injections de fautes, que l'algorithme de carré et multiplication.

Plus généralement, des problèmes similaires peuvent se poser pour tout calcul, par un circuit électronique, d'un nombre entier d'applications d'une loi de composition interne sur des éléments d'un groupe abélien, par itérations successives d'étapes différentes selon le caractère pair ou impair d'un coefficient courant d'une représentation polynomiale dudit nombre entier dont le degré détermine le nombre d'itérations.

Dans le cas de l'exponentiation, l'exposant est l'entier et la loi de composition ou opération interne du groupe abélien est la multiplication.

Un autre problème est la détection d'une éventuelle perturbation dans le fonctionnement du circuit. En effet, si le circuit est en mesure de détecter cette perturbation, il peut alors prendre des mesures appropriées comme bloquer la carte à puce ou fournir un résultat volontairement erroné.

Le document WO-A-02/099624 décrit un procédé de sécurisation d'un calcul d'exponentiation dans un dispositif électronique par itérations successives d'étapes différentes selon que la valeur d'un bit d'un nombre prédéterminé vaut 1 ou 0.

### Résumé de l'invention

La présente invention vise à pallier tout ou partie des inconvénients des algorithmes connus de calcul par itérations successives sur un groupe exécutés par un circuit électronique.

L'invention vise plus particulièrement la détection d'une perturbation volontaire ou accidentelle dans l'exécution du calcul.

L'invention vise également à empêcher l'exploitation d'éventuelles attaques, notamment, par injection de fautes dans le circuit électronique exécutant le calcul.

L'invention vise également une solution qui ne nuise pas à la rapidité d'exécution des calculs.

Selon un objet, la présente invention vise plus particulièrement les exponentiations d'un élément d'un groupe par la méthode de carré et multiplication.

Selon un autre objet, la présente invention vise plus particulièrement les calculs par application de la méthode d'addition et doublement.

Pour atteindre tout ou partie de ces objets ainsi que d'autres, la présente invention prévoit un procédé de détection d'une perturbation d'un calcul, par un circuit électronique, d'un résultat d'un nombre entier d'applications d'une loi de composition interne sur des éléments d'un groupe abélien, par itérations successives d'étapes différentes selon le caractère pair ou impair d'un coefficient courant d'une représentation polynomiale dudit nombre entier dont le degré détermine le nombre d'itérations, chaque itération comportant :
en cas de coefficient courant impair, une étape de mise à jour d'au moins une première variable destinée à contenir le résultat en fin de calcul ; et
en cas de coefficient courant pair, au moins une étape de mise à jour d'une deuxième variable et une étape de comparaison de cette deuxième variable par rapport à une valeur attendue, le contenu de cette deuxième variable ne conditionnant pas le résultat du calcul.

Selon un mode de mise en oeuvre de la présente invention, une absence d'identité entre la deuxième variable et ladite valeur attendue conduit à un arrêt du calcul.

Selon un mode de mise en oeuvre de la présente invention, en cas d'absence d'identité entre la deuxième variable et ladite valeur attendue, la première variable est mise à jour par une fonction modifiant sa valeur, avant poursuite du reste du calcul.

Selon un mode de mise en oeuvre de la présente invention, si ladite étape de comparaison conduit à une identité entre la deuxième variable et la valeur attendue, la deuxième variable est mise à jour par l'application de ladite fonction à ladite première variable.

Selon un mode de mise en oeuvre de la présente invention, le procédé exécute, tant que tous les coefficients significatifs de la représentation polynomiale du nombre entier n'ont pas été traités, au moins les opérations suivantes :
si le coefficient courant est pair : D=A(+)B, sinon R=R (+) T et D=f (R) ; et
dans tous les cas : T=T(+)T,
où (+) désigne ladite loi de composition, R est ladite première variable initialisée avec l'élément neutre de la loi de composition pour contenir le résultat final, T est une troisième variable initialisée avec la valeur de l'élément à soumettre au calcul, f est une fonction modifiant son opérande, D est ladite deuxième variable, et A et B sont des valeurs numériques.

Selon un mode de mise en oeuvre de la présente invention, ladite valeur attendue est le résultat d'une application de ladite loi de composition à deux éléments du groupe, ladite étape de mise à jour de la deuxième variable consistant à soumettre ces deux éléments à ladite loi de composition.

Selon un mode de mise en oeuvre de la présente invention, en cas de coefficient courant impair, une étape de comparaison inutile de la deuxième variable est effectuée après la mise à jour de la première variable.

Selon un mode de mise en oeuvre de la présente invention, ledit nombre entier est représenté en binaire.

Selon un mode de mise en oeuvre de la présente invention, le procédé est appliqué au calcul d'une exponentiation, dans lequel :
ledit élément est un nombre ;
ladite loi de composition interne est une opération de multiplication ; et
ledit nombre entier est l'exposant.

L'invention prévoit également un procédé de chiffrement ou déchiffrement selon l'algorithme RSA.

Selon un mode de mise en oeuvre de la présente invention, ledit élément est un point d'une courbe elliptique.

Selon un mode de mise en oeuvre de la présente invention, les variables sont contenues dans des registres du circuit électronique.

L'invention prévoit également une cellule de calcul.

L'invention prévoit également un circuit intégré comportant une cellule de calcul.

### Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :
la figure 1 qui a été décrite précédemment représente, de façon très schématique, un exemple de carte à puce du type auquel s'applique à titre d'exemple la présente invention ;
la figure 2 qui a été décrite précédemment représente, de façon très schématique et sous forme de blocs, un exemple classique de microcontrôleur pourvu d'une cellule matérielle de calcul cryptographique du type auquel s'applique à titre d'exemple la présente invention ;
la figure 3 qui a été décrite précédemment illustre, de façon très schématique et sous forme de blocs, l'exécution d'un chiffrement-déchiffrement par un algorithme RSA auquel s'applique à titre d'exemple la présente invention ;
la figure 4 qui a été décrite précédemment est un organigramme d'un exemple classique de calcul d'exponentiation par la méthode de carré et multiplication ;
la figure 5 qui a été décrite précédemment illustre, de façon très schématique et sous forme de blocs, l'exécution d'un protocole de Diffie-Hellman sur courbe elliptique auquel s'applique à titre d'exemple la présente invention ;
la figure 6 qui a été décrite précédemment est un organigramme d'un exemple classique de calcul par la méthode d'addition et doublement ;
la figure 7 est un algorithme illustrant, de façon très schématique et sous forme de blocs, un mode de mise en oeuvre de la présente invention appliqué à un calcul d'exponentiation ; et
la figure 8 est un organigramme illustrant le mode de mise en oeuvre de la figure 7 appliqué à un calcul d'addition et doublement.

De mêmes éléments ont été désignés par de mêmes références aux différentes figures. Par souci de clarté, seuls les étapes et éléments qui sont utiles à la compréhension de l'invention ont été représentés aux figures et seront décrits par la suite. En particulier, les éléments matériels (registres, opérateurs, etc.) utilisés pour la mise en oeuvre de l'invention au moyen d'un circuit intégré n'ont pas été détaillés, l'invention étant compatible avec les éléments utilisés pour la mise en oeuvre des algorithmes classiques.

### Description détaillée

La présente invention sera décrite par la suite en relation avec deux exemples d'application respectivement à un calcul d'exponentiation par la méthode du carré et multiplication et à un calcul itératif par la méthode d'addition et doublement. On notera toutefois qu'elle s'applique plus généralement à tout calcul (arbitrairement noté "."), par un circuit électronique, d'un résultat d'un nombre entier d'applications d'une loi de composition interne (arbitrairement notée (+)) sur des éléments d'un groupe, pourvu que le calcul se décompose en plusieurs itérations d'étapes appliquant la loi de composition sur des variables représentant des éléments du groupe et que les étapes soient différentes selon le caractère pair ou impair d'un coefficient courant d'une représentation polynomiale du nombre entier dont le degré significatif détermine le nombre d'itérations.

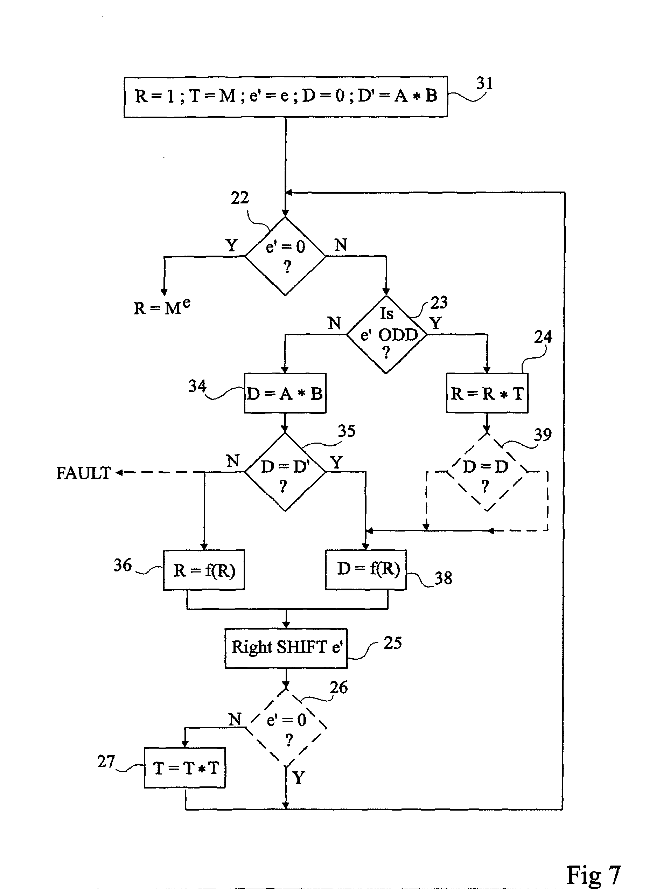

La figure 7 est un organigramme illustrant un mode de mise en oeuvre de l'invention, appliqué à un calcul d'exponentiation, permettant de détecter une éventuelle attaque par injection de faute dans son déroulement.

Comme précédemment, une première étape (bloc 31, R=1 ; T=M ; e'=e ; D=0 ; D'=A*B) comporte l'initialisation d'une variable résultat R à l'unité (élément neutre de la loi de composition - ici la multiplication - du groupe), d'une variable temporaire T avec la valeur M (élément du groupe) à soumettre à l'exponentiation, et d'une variable d'exposant e' avec les coefficients d'une représentation polynomiale (binaire) de l'exposant e (nombre entier de fois que devrait être appliquée la multiplication). Dans le cas d'une exponentiation modulaire, tous les calculs qui seront exposés s'effectuent modulo n, dont la valeur est alors connue ou reçue par la cellule d'exécution de l'algorithme.

Selon ce mode de mise en oeuvre de la présente invention, l'étape d'initialisation 31 comporte en outre l'initialisation d'une variable D à une valeur (par exemple, 0) quelconque et d'une variable D' à une valeur correspondant au résultat de la multiplication de deux nombres A et B choisis arbitrairement, par exemple, de façon aléatoire à chaque initialisation. Dans le cas d'une exponentiation modulaire, les nombres A et B sont préférentiellement choisis de la même taille que celle de la valeur (n) du modulo. En variante, la variable D n'est pas initialisée.

Le calcul s'effectue, comme dans le cas classique de la figure 4, par itérations au moins sur les variables T et R. La valeur courante de la variable e' est, avant chaque itération, testée (bloc 22, e'=0 ?) pour déterminer si elle contient encore des bits (coefficients de l'expression polynomiale du nombre entier) significatifs. Dans la négative (sortie Y du bloc 22), la variable R contient le résultat M^{e} de l'exponentiation. Sinon, le caractère pair ou impair de la variable e' (bloc 23, Is e' ODD ?) ou la valeur 0 ou 1 de son bit de poids faible est testé. Si e' est impair (bit de poids faible à 1), le contenu de la variable R est multiplié (loi de composition ou opération du groupe) par le contenu de la variable T (bloc 24, R=R*T).

Dans le cas (sortie N du bloc 23) où le bit courant de l'exposant vaut 0 (variable e' paire), la variable D est mise à jour par le résultat de la multiplication des grandeurs A et B (bloc 34, D=A*B). Ces valeurs A et B peuvent être quelconques mais sont prédéfinies de façon à ce que le contenu de la variable D suite à l'étape 34 puisse être comparé au contenu de la variable D'. En variante, la variable D est mise à jour directement par une valeur attendue. Toutefois, un avantage d'effectuer une multiplication à l'étape 34 est que cela préserve un temps d'exécution indépendant de l'état du bit courant de l'exposant. La comparaison fait l'objet d'une étape suivante (bloc 35, D=D' ?) qui constitue l'étape de détection d'une éventuelle perturbation dans l'algorithme. Dans le cas où les variables D et D' sont différentes l'une de l'autre, cela signifie qu'une perturbation a eu lieu depuis le dernier test (itération précédente).

Selon un premier mode de mise en oeuvre, cette détection conduit à une action (FAULT) immédiate. Il peut s'agir de n'importe quelle action prise habituellement dans de tels circuits en cas de détection de tentative de perturbation, par exemple, un blocage de la carte à puce, une incrémentation d'un compteur d'évènements fautifs, etc.

Selon le mode de mise en oeuvre préféré illustré par la figure 5, le test 35 conduit à une modification du calcul. Si les variables D et D' sont identiques (sortie Y du test 35), le contenu de la variable D est remplacé par le résultat de l'application d'une fonction f à la variable R (bloc 38, D=f(R)). Dans le cas contraire (sortie N du test 35), le contenu de la variable résultat R est remplacé (bloc 36, R=f (R) ) par la valeur f(R). Cela conduit, en cas de détection d'une perturbation, à fausser le résultat ultérieur calculé par l'algorithme.

De préférence, pour masquer le temps d'exécution et la consommation, une fois la variable R mise à jour au bloc 24, la variable D est mise à jour avec le résultat de la fonction f appliqué à la variable R (bloc 38, D=f(R)) et un test (bloc 39, D=D?) dont le résultat est inutile (ou dont les deux sorties conduisent à l'étape 38) est intercalé entre les étapes 24 et 38. En variante, le test 39 pourra être remplacé par un test identique au test 35, pourvu d'effectuer l'étape 38 quel que soit le résultat de ce test.

La fonction f est une fonction quelconque, pourvu qu'elle modifie la variable d'entrée. On pourra choisir, par exemple, un décalage ou une inversion des bits de la variable R de façon aléatoire, mais plus généralement toute fonction telle que le résultat D soit différent de R.

Puis, les bits de la valeur courante de la variable e' sont décalés (bloc 25, Right SHIFT e') vers la droite pour éliminer le bit de poids le plus faible (coefficient du terme de degré minimal de l'expression polynomiale du nombre e). Le contenu de la variable T est alors multiplié par lui-même (bloc 27, T=T*T). L'itération est alors terminée (retour en entrée du bloc 22).

Comme précédemment, un test (bloc 26, e'=0 ? en pointillés) peut optionnellement être prévu sur la variable e' avant l'étape 27 pour éviter cette étape à la dernière itération (sortie Y du bloc 26).

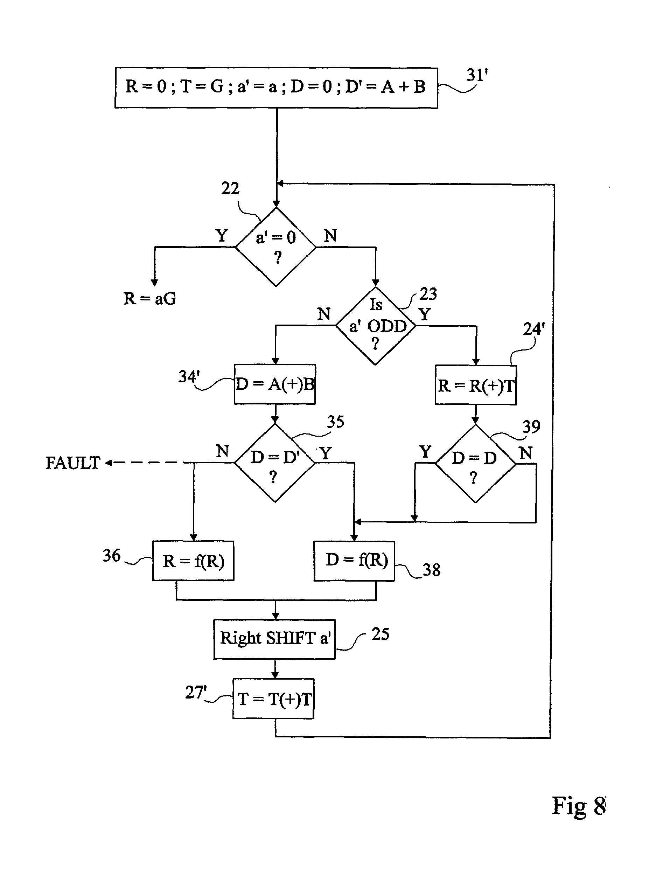

La figure 8 est un organigramme illustrant l'application du premier mode de mise en oeuvre de l'invention à un calcul sur une courbe elliptique, en utilisant une méthode d'addition et doublement.

Le calcul de la figure 8 est similaire à celui de la figure 7 en :
initialisant (bloc 31', R=0 ; T=G; a'=a ; D=0 ; D'=A*B) les variables R, T, a', D et D', respectivement avec les valeurs 0 désignant l'élément neutre de la loi de composition (notée ici addition (+)) sur le groupe (ici la courbe elliptique), G désignant l'élément du groupe (ici le point de la courbe elliptique), une suite de coefficients (ici une suite de bits) d'une représentation polynomiale d'un nombre entier a désignant le nombre de fois que la loi de composition devrait être appliquée, une valeur quelconque (par exemple 0) et une valeur représentant l'application de la loi de composition à deux valeurs quelconques A et B ;
remplaçant les multiplications des blocs 24, 27 et 34 par des "additions" (bloc 24', R=R (+) T, bloc 27', T=T (+) T et bloc 34', D=A(+)B) ; et
appliquant les étapes 22, 23 et 25 à la variable a'.

Comme pour le mode de mise en oeuvre de la figure 7, l'initialisation des variables D et D' est optionnelle car ces variables sont modifiées dès qu'elles interviennent dans le calcul. En figure 8, le test 26 a été supprimé.

Un avantage de la présente invention est qu'elle permet de détecter une perturbation éventuelle au sein même de l'algorithme, dès qu'une telle perturbation se produit sans que le pirate ait eu le temps d'en exploiter les résultats.

Un autre avantage est, notamment dans le cas où le fonctionnement du circuit n'est pas immédiatement interrompu, que le résultat fourni peut être faussé sans pour autant qu'un pirate éventuel s'aperçoive que la perturbation a été détectée.

Selon une variante de réalisation, l'étape 36 est remplacée par une mise à jour de la variable T par le résultat f(T). Cela perturbe également le résultat du calcul en agissant sur la variable T.

Selon une autre variante, les variables A et B sont des valeurs choisies arbitrairement (par exemple, lors de la fabrication, de la programmation ou de la personnalisation du circuit électronique) et stockées de façon non volatile.

Bien entendu, la présente invention est susceptible de diverses variantes et modifications qui apparaîtront à l'homme de l'art. En particulier, l'invention s'applique quelle que soit la taille des nombres manipulés.

De plus, la mise en oeuvre pratique de l'invention à partir des indications fonctionnelles données ci-dessus est à la portée de l'homme du métier en utilisant des outils matériels et/ou logiciels disponibles. En particulier, une réalisation matérielle à partir de registres ou autre circuits de mémorisation, d'opérateurs divers, de comparateurs d'états de bits, etc. reprend des éléments usuels.

En outre, la transposition des modes de réalisation de l'invention à d'autres lois de composition sur d'autres groupes est à la portée de l'homme du métier.

## Revendications

1. Procédé de détection d'une perturbation d'un calcul, par un circuit électronique, d'un résultat d'un nombre entier (e ; a) d'applications d'une loi de composition interne (* ; (+)) sur des éléments d'un groupe abélien, par itérations successives d'étapes différentes selon le caractère pair ou impair d'un coefficient courant d'une représentation polynomiale dudit nombre entier dont le degré détermine le nombre d'itérations, chaque itération comportant :
en cas de coefficient courant impair, une étape (24 ; 24') de mise à jour d'au moins une première variable (R) destinée à contenir le résultat en fin de calcul ; et
en cas de coefficient courant pair, au moins une étape (34 ; 34') de mise à jour d'une deuxième variable (D), le contenu de cette deuxième variable ne conditionnant pas le résultat du calcul, **caractérisé en ce que** chaque itération comporte en cas de coefficient courant pair aussi une étape de comparaison (35) de la deuxième variable par rapport à une valeur attendue (D').

2. Procédé selon la revendication 1, dans lequel une absence d'identité entre la deuxième variable (D) et ladite valeur attendue (D') conduit à un arrêt du calcul.

3. Procédé selon la revendication 1, dans lequel en cas d'absence d'identité entre la deuxième variable (D) et ladite valeur attendue (D'), la première variable (R) est mise à jour (36) par une fonction (f) modifiant sa valeur, avant poursuite du reste du calcul.

4. Procédé selon la revendication 3, dans lequel si ladite étape de comparaison (35) conduit à une identité entre la deuxième variable (D) et la valeur attendue (D'), la deuxième variable est mise à jour (38) par l'application de ladite fonction (f) à ladite première variable (R).

5. Procédé selon l'une quelconque des revendications 3 et 4, exécutant, tant que tous les coefficients significatifs de la représentation polynomiale (e' ; a') du nombre entier (e ; a) n'ont pas été traités, au moins les opérations suivantes :
si le coefficient courant est pair : D=A(+)B, sinon R=R(+)T et D=f(R) ; et
dans tous les cas : T=T(+)T,
où (+) désigne ladite loi de composition (* ; (+)), R est ladite première variable initialisée avec l'élément neutre (1 ; 0) de la loi de composition pour contenir le résultat final, T est une troisième variable initialisée avec la valeur de l'élément (M ; G) à soumettre au calcul, f est une fonction modifiant son opérande, D est ladite deuxième variable, et A et B sont des valeurs numériques.

6. Procédé selon l'une quelconque des revendications 1 à 5, dans lequel ladite valeur attendue (D') est le résultat d'une application de ladite loi de composition (*, (+)) à deux éléments du groupe (A, B), ladite étape (34 ; 34') de mise à jour de la deuxième variable (D) consistant à soumettre ces deux éléments à ladite loi de composition.

7. Procédé selon l'une quelconque des revendications 1 à 6, dans lequel en cas de coefficient courant impair, une étape de comparaison inutile (39) de la deuxième variable (D) est effectuée après la mise à jour (24 ; 24') de la première variable (R).

8. Procédé selon l'une quelconque des revendications 1 à 7, dans lequel ledit nombre entier (e ; a) est représenté en binaire.

9. Procédé selon l'une quelconque des revendications 1 à 8, appliqué au calcul d'une exponentiation, dans lequel :
ledit élément (M) est un nombre ;
ladite loi de composition interne est une opération de multiplication (*) ; et
ledit nombre entier est l'exposant (e).

10. Procédé de chiffrement ou déchiffrement selon l'algorithme RSA, **caractérisé en ce qu'**il met en oeuvre au moins un calcul conforme à la revendication 9.

11. Procédé selon l'une quelconque des revendications 1 à 8, dans lequel ledit élément (G) est un point d'une courbe elliptique.

12. Procédé selon l'une quelconque des revendications 1 à 11, dans lequel les variables sont contenues dans des registres du circuit électronique.

13. Cellule de calcul comportant des moyens spécialement adaptés pour la mise en oeuvre du procédé selon l'une quelconque des revendications 1 à 12.

14. Circuit intégré comportant une cellule de calcul conforme à la revendication 13.

## Claims

1. A method of detection of a disturbance of a calculation, by an electronic circuit, of a result of an integral number (e; a) of applications of an internal composition law (*; (+)) on elements of an abelian group, by successive iterations of different steps according to the even or odd character of a current coefficient of a polynomial representation of said integral number, the degree of which determines the number of iterations, each iteration comprising:
in case of an odd current coefficient, a step (24; 24') of updating at least one first variable (R) intended to contain the result at the end of the calculation; and
in case of an even current coefficient, at least a step (34; 34') of updating a second variable (D), the content of this second variable not conditioning the result of the calculation,
**characterized in that** each iteration also comprises in case of an even current coefficient a step of comparison (35) of the second variable with an expected value (D').

2. The method of claim 1, wherein a lack of identity between the second variable (D) and said expected value (D') results in a stopping of the calculation.

3. The method of claim 1, wherein in case there is no identity between the second variable (D) and said expected value (D'), the first variable (R) is updated (36) by a function (f) modifying its value, before proceeding to the rest of the calculation.

4. The method of claim 3, wherein if said comparison step (35) results in an identity between the second variable (D) and the expected value (D'), the second variable is updated (38) by the application of said function (f) to said first variable (R).

5. The method of claim 3 or 4, executing, as long as all the significant coefficients of the polynomial representation (e'; a') of the integer (e; a) have not been processed, at least the following operations:
if the current coefficient is even: D=A(+)B, otherwise R=R(+)T and D=f(R); and
in all cases: T=T(+)T,
where (+) designates said composition law (*; (+)), R is said first variable initialized with the neutral element (1; 0) of the composition law to contain the final result, T is a third variable initialized with the value of the element (M; G) to be submitted to the calculation, f is a function modifying its operand, D is said second variable, and A and B are digital values.

6. The method of any of claims 1 to 5, wherein said expected value (D') is the result of an application of said composition law (*, (+)) to two elements of the group (A, B), said step (34; 34') of updating the second variable (D) consisting of submitting these two elements to said composition law.

7. The method of any of claims 1 to 6, wherein in case of an odd current coefficient, a step of needless comparison (39) of the second variable (D) is performed after updating (24; 24') of the first variable (R).

8. The method of any of claims 1 to 7, wherein said integer (e; a) is represented in binary form.

9. The method of any of claims 1 to 8, applied to the calculation of an exponentiation, wherein:
said element (M) is a number;
said internal composition law is a multiplication (*) operation; and
said integer is the exponent (e).

10. A ciphering or deciphering method according to the RSA algorithm, **characterized in that** it implements at least one calculation of claim 9.

11. The method of any of claims 1 to 8, wherein said element (G) is a point of an elliptic curve.

12. The method of any of claims 1 to 11, wherein the variables are contained in registers of the electronic circuit.

13. A calculation cell comprising means specially adapted for implementing the method of any of claims 1 to 12.

14. An integrated circuit comprising the calculation cell of claim 13.

## Patentansprüche

1. Verfahren zur Detektion einer Störung einer Berechnung, durch einen elektronischen Schaltkreis, eines Ergebnisses einer ganzen Zahl (e; a) von Anwendungen eines internen Verknüpfungsgesetzes (*; (+)) auf Elemente einer Abelschen Gruppe durch fortlaufende Wiederholung verschiedener Schritte, entsprechend der Geradzahlig- oder Ungeradzahligkeit eines momentanen Koeffizienten einer Polynomdarstellung der ganzen Zahl, wobei der Grad derselben die Anzahl der Wiederholungen bestimmt und wobei jede Wiederholung Folgendes aufweist:
im Fall eines ungeraden momentanen Koeffizienten einen Schritt (24; 24') des Aktualisierens wenigstens einer ersten Variable (R), welche dafür vorgesehen ist das Ergebnis am Ende der Berechnung zu enthalten; und
im Fall eines geraden momentanen Koeffizienten, wenigstens einen Schritt (34; 34') des Aktualisierens einer zweiten Variable (D),
wobei der Inhalt dieser zweiten Variable das Ergebnis der Berechnung nicht beeinflusst,
**dadurch gekennzeichnet, dass** jede Wiederholung ferner im Fall eines geraden momentanen Koeffizienten einen Schritt des Vergleichens (35) der zweiten Variable mit einem Erwartungswert (D') aufweist.

2. Verfahren nach Anspruch 1, wobei ein Mangel an Gleichheit zwischen der zweiten Variable (D) und dem Erwartungswert (D') in einem Anhalten der Berechnung resultiert.

3. Verfahren nach Anspruch 1, wobei im Fall der Ungleichheit zwischen der zweiten Variable (D) und dem Erwartungswert (D') die erste Variable (R) durch eine Funktion (f), die deren Wert modifiziert, aktualisiert wird (36), bevor mit dem Rest der Berechnung fortgefahren wird.

4. Verfahren nach Anspruch 3, wobei, wenn der Vergleichsschritt (35) in einer Gleichheit zwischen der zweiten Variable (D) und dem Erwartungswert (D') resultiert, die zweite Variable durch eine Anwendung der Funktion (f) auf die erste Variable (R) aktualisiert (38) wird.

5. Verfahren nach den Ansprüchen 3 oder 4, das ferner das Ausführen beinhaltet, so lange wie alle signifikanten Koeffizienten der Polynomdarstellung (e'; a') der Ganzzahl (e; a) noch nicht verarbeitet sind, wenigstens die folgenden Operationen:
wenn der momentane Koeffizient gerade ist: D=A(+)B, andernfalls R=R(+)T und D=f(R); und
in allen Fällen: T=T(+)T,
wobei (+) das Verknüpfungsgesetz (*; (+)) bezeichnet, R ist die erste Variable, die mit dem neutralen Element (1; 0) des Verknüpfungsgesetzes initialisiert ist, um das endgültige Ergebnis zu enthalten, T ist eine dritte Variable, die mit dem Wert des Elements (M; G) initialisiert ist, um an die Berechnung übergeben zu werden, f ist eine Funktion, die den Operanden modifiziert, D ist die zweite Variable und A und B sind digitale Werte.

6. Verfahren nach einem der Ansprüche 1 bis 5, wobei der Erwartungswert (D') das Ergebnis einer Anwendung des Verknüpfungsgesetzes (*, (+)) auf zwei Elemente der Gruppe (A, B) ist,
wobei der Schritt (34; 34') des Aktualisierens der zweiten Variable (D) aus dem Übergeben dieser zwei Elemente an das Verknüpfungsgesetz besteht.

7. Verfahren nach einem der Ansprüche 1 bis 6, wobei im Fall eines ungeraden momentanen Koeffizienten, ein Schritt eines unnötigen Vergleichs (39) der zweiten Variable (D) nach dem Aktualisieren (24; 24') der ersten Variable (R) durchgeführt wird.

8. Verfahren nach einem der Ansprüche 1 bis 7, wobei die Ganzzahl (e; a) in Binärform dargestellt ist.

9. Verfahren nach einem der Ansprüche 1 bis 8, angewendet auf die
Berechnung einer Exponentiation, wobei:
das Element (M) eine Zahl ist;
das interne Verknüpfungsgesetz eine Multiplikationsoperation (*) ist; und
die Ganzzahl der Exponent (e) ist.

10. Chiffrier- oder Dechiffrierverfahren entsprechend dem RSA Algorithmus, **dadurch gekennzeichnet, dass** es wenigstens eine Berechnung gemäß Anspruch 9 durchführt.

11. Verfahren nach einem der Ansprüche 1 bis 8, wobei das Element (G) ein Punkt einer elliptischen Kurve ist.

12. Verfahren nach einem der Ansprüche 1 bis 11, wobei die Variablen in Registern des elektronischen Schaltkreises enthalten sind.

13. Berechnungszelle, die Mittel aufweist, die besonders geeignet sind, das Verfahren nach einem der Ansprüche 1 bis 12 durchzuführen.

14. Integrierter Schaltkreis, der die Berechnungszelle gemäß Anspruch 13 aufweist.
